# EUROPÄISCHE PATENTSCHRIFT

(11) **EP 1 805 481 B1**
(45) Veröffentlichungstag und Bekanntmachung des Hinweises auf die Patenterteilung: **10.12.2008**
(21) Anmeldenummer: 05802483.7
(22) Anmeldetag: 21.10.2005
(51) Int. Cl.: G01B 11/245

(54) **SYSTEM UND VERFAHREN ZUM VERMESSEN EINES KÖRPERS UND ZUM ÜBERWACHEN VON DESSEN OBERFLÄCHE**
SYSTEM AND METHOD FOR MEASURING A BODY AND FOR MONITORING THE SURFACE THEREOF
SYSTEME ET PROCEDE POUR MESURER UN CORPS ET POUR EN SURVEILLER LA SURFACE

(30) Priorität: 21.10.2004 DE 102004052508
(43) Veröffentlichungstag der Anmeldung: 11.07.2007
(73) Patentinhaber: Pixargus GmbH, 52070 Aachen (DE)
(72) Erfinder: LINDNER, Björn, 52074 Aachen (DE); PHILLIPS, Jürgen, 52062 Aachen (DE); BEAUJEAN, René, 52066 Aachen (DE)
(74) Vertreter: Dammertz, Ulrich
(86) Internationale Anmeldenummer: PCT/DE2005/001889
(87) Internationale Veröffentlichungsnummer: WO 2006/042535

(56) Entgegenhaltungen:
- WO-A-01/59404
- DE-A1- 10 120 430
- DE-A1- 10 328 537

## Beschreibung

Die Erfindung betrifft ein System und ein Verfahren zum Vermessen und zum Überwachen einer Oberfläche eines Körpers. Die Erfindung eignet sich insbesondere für eine Qualitätskontrolle eines Körpers im Hinblick auf Toleranzen und Oberflächenbeschaffenheit.

Für eine zuverlässige Qualitätskontrolle insbesondere von Endlosprofilen hat sich in jüngster Zeit die Analyse mittels elektronischer digitaler Bildverarbeitung durchgesetzt. Ein Bestrahlen der Profiloberfläche mittels einer geeigneten Lichtquelle und ein Detektieren der reflektierten Strahlung durch eine elektronische Kameraeinrichtung mit anschließender elektronischer Bildverarbeitung gewährt Rückschlüsse auf die Abmessung und Toleranzen eines Körpers als auch über die Beschaffenheit seiner Oberfläche.

Aus der US 6,064,759 ist die Vermessung eines Körpers bekannt, wobei eine Lichtquelle für strukturiertes Licht, die in einem Winkel schräg zur Oberfläche des Körpers angeordnet ist, und eine senkrecht zur Körperoberfläche angeordnete Aufnahmeeinrichtung zum Einsatz kommen. Bei der Lichtquelle für strukturiertes Licht handelt es sich um einen Laser. Die Auswertung der von dem Körper erfassten Bildpunkte beruht auf den bekannten Verfahren zur digitalen Bildverarbeitung.

Die DE 103 28 537 A1 offenbart eine Vorrichtung und ein Verfahren zum Vermessen der Dimension eines Körpers. Hierbei wird eine Strahlung vorbei an einer Abschattungseinrichtung auf den Körper gerichtet, so dass sich auf der Oberfläche des Körpers eine sogenannte scharfe Lichtkante bildet. Eine geeignete Sensoreinrichtung erfasst die von der scharfen Lichtkante reflektierte Strahlung und wandelt diese in Bilddaten um, mit denen anschließend eine Bildauswertung zur Dimensionsbestimmung des Körpers durchgeführt wird.

Die DE 101 20 430 A1 zeigt eine Vorrichtung zur automatischen Oberflächeninspektion von Profilen mit elektronischen Kameraeinrichtungen. Ein Endlosprofil wird hierbei durch einen sogenannten Lichtring geführt und dabei von entsprechenden Lichtquellen, die entlang des Lichtringes angeordnet sind, entlang seines Umfangs mit Licht bestrahlt. Elektronische Kameraeinrichtungen sind angrenzend an den Lichtring vorgesehen, um Licht, das von der Oberfläche des Profils reflektiert wird, aufzufangen, um anschließend eine Auswertung der Bildpunkte für eine Oberflächeninspektion durchzuführen. Diese Vorrichtung unterliegt jedoch dem Nachteil, dass zum Erzielen von zuverlässigen Messergebnissen eine genaue Position der Kameraeinrichtungen relativ zu dem zu vermessenden Profil bekannt sein muss, was ein aufwendiges Einstellen der Vorrichtung bzw. ein aufwendiges Kalibrieren erforderlich macht.

Entsprechend liegt der Erfindung die Aufgabe zugrunde, eine Oberflächeninspektion eines Körpers insbesondere mittels digitaler Bildverarbeitung hinsichtlich einer Geräteeinstellung zu vereinfachen.

Die Aufgabe wird durch ein System mit dem Merkmalen von Anspruch 1 und durch ein Verfahren mit den Merkmalen von Anspruch 10 gelöst. Vorteilhafte Weiterbildungen der Erfindung sind Gegenstand der abhängigen Ansprüche.

Das erfindungsgemäße System eignet sich zum Vermessen eines Körpers und weist zumindest ein erstes Untersystem und zumindest ein zweites Untersystem auf. Mit dem ersten Untersystem wird eine Dimension des Körpers und eine Position des Körpers innerhalb des ersten Untersystems bestimmt, und mit dem zweiten Untersystem wird eine Oberflächenstruktur des Körpers bestimmt. Beide Untersysteme basieren zweckmäßigerweise auf dem Prinzip der digitalen Bildverarbeitung und können hierzu jeweils eine elektronische Kameraeinrichtung und eine geeignete Lichtquelle aufweisen. Das erfindungsgemäße System umfasst des weiteren eine Steuereinheit, die Steuersignale für einen Betrieb des zweiten Untersystems als Funktion von Daten des ersten Untersystems bezüglich einer Position des Körpers in dem ersten Untersystem und/oder der Dimension des Körpers, und als Funktion von Daten des zweiten Untersystems bezüglich der Position der zweiten Kameraeinrichtung in dem zweiten Untersystem erzeugt.

Unter Steuereinheit kann ein elektronisches Bauelement verstanden werden, das die genannten Steuersignale für einen Betrieb des zweiten Untersystem erzeugt. Alternativ dazu kann die Steuereinheit auch im Sinne einer Programmroutine verstanden werden. Eine solche Programmroutine kann z.B. auf einem beliebigen geeigneten Rechner ausgeführt wird, oder aber in dem ersten Untersystem oder in dem zweiten Untersystem geeignet implementiert sein. In diesem Zusammenhang versteht sich, daß es sich bei den erzeugten Steuersignalen nicht zwingend um elektrische Signale handeln muß.

Falls das erste Untersystem eine elektronische Kameraeinrichtung als Aufnahmeeinrichtung aufweist, kann die Auswertung von Messdaten des Körpers vorteilhaft auf dem Prinzip der Triangulation beruhen. Alternativ hierzu kann das erste Untersystem anstelle einer elektronischen Kameraeinrichtung auch eine Aufnahmeeinrichtung in Form eines sogenannten Photozeilendetektor aufweisen, der in gleicher Weise ein Aufzeichnen von Bildpunkten der Körperoberfläche gewährleistet. Dies gilt analog für einen Photozeilendetektor, der abschattungsbasiert eingesetzt wird. Hierbei ist der Körper in einem Strahlungsfeld zwischen der Lichtquelle und dem Photozeilendetektor angeordnet.

Bei dem Photozeilendetektor handelt es sich um einen Zeilendetektor bzw. Zeilensensor, der zumindest eine Zeile oder eine Mehrzahl von Zeilen umfaßt, wodurch eine Information bezüglich der Breite des Körpers und/oder der Position des Körpers innerhalb des ersten Untersystems erhalten wird. In dem Zeilendetektor können die Mehrzahl von Zeilen übereinander und parallel zueinander angeordnet sein. Der Photozeilendetektor kann als Photozellendetektor ausgebildet sein, bei dem entlang der zumindest eine Zeile eine Mehrzahl von Photozellen ausgebildet bzw. vorgesehen sind. Die einzelnen Photozellen werden nach Eintreten von Strahlung geeignet ausgelesen.

Ein wesentliches Merkmal des erfindungsgemäßen Systems bzw. des Verfahrens liegt darin, dass die Informationen bzw. die Daten, die durch das erste Untersystem über die Position und die Art des zu vermessenden Körpers innerhalb des ersten Untersystems gewonnen werden, in einer geeigneten Steuereinheit in Steuersignale für einen Betrieb des zweiten Untersystems umgesetzt werden. Die erzeugten Steuersignale sind ebenfalls eine Funktion der Daten des zweiten Untersystems bezüglich der Position der Kameraeinrichtung in dem zweiten Untersystem. Anders ausgedrückt, erfolgt der Betrieb des zweiten Untersystems auf Grundlage der Daten des ersten Untersystems und in Abhängigkeit der Kameraposition in dem zweiten Untersystem.

In vorteilhafter Weiterbildung der Erfindung kann die Position der Kameraeinrichtung in dem zweiten Untersystem vor einer Inbetriebnahme des Systems vorbestimmt sein, d.h. im voraus bekannt sein. Das zweite Untersystem kann auch mit einer Sensoreinrichtung versehen sein, die die Position der darin vorgesehenen Kameraeinrichtung detektiert und diese Information entsprechend an die Steuereinheit weiterleitet. In jedem Fall ist dabei sichergestellt, dass die Steuereinheit in Verbindung mit den Signalen des ersten Untersystems eine Information über einen Abstand der Kameraeinrichtung des zweiten Untersystems und über ihre Winkelposition relativ zu dem zu vermessenden Körper erhält, was für eine genaue Messauswertung bei der digitalen Bildverarbeitung von großer Bedeutung ist.

In vorteilhafter Weiterbildung der Erfindung können die jeweiligen elektronischen Kameraeinrichtungen des ersten und zweiten Untersystems in einer einzigen elektronischen Kameraeinrichtung zusammengefasst sein. Eine solche Kameraeinrichtung kann insbesondere aus einer CMOS-Kamera gebildet sein und ist für einen Betrieb des ersten bzw. zweiten Untersystems umschaltbar. Ein Umschalten der gemeinsamen Kameraeinrichtung kann zweckmäßigerweise durch geeignete elektronische Signale erfolgen. Bei einem Betrieb des ersten Untersystems ist diese elektronische Kameraeinrichtung in einen Flächenmodus geschaltet, und bei einem Betrieb des zweiten Untersystems ist sie in einen Zeilenmodus geschaltet. In Abstimmung mit einem Umschalten dieser Kameraeinrichtung werden auch die Lichtquellen des ersten bzw. des zweiten Untersystems umgeschaltet.

In weiterer vorteilhafter Weiterbildung der Erfindung kann die gemeinsame Kameraeinrichtung beider Untersysteme in einem gleichbleibenden Modus betrieben werden, z.B. ein Flächenmodus, wobei in Zuordnung zu einem jeweiligen Untersystem gewünschte Bildausschnitte ausgewählt und anschließend ausgewertet werden. Hierdurch kann in Bezug auf das erste Untersystem eine Verarbeitung von Bilddaten aus nicht relevanten Randbereichen vermieden werden. In Bezug auf das zweite Untersystem kann in dem genannten gleichbleibenden Modus der gemeinsamen Kameraeinrichtung , z.B dem Flächenmodus eine Auswertung anhand einer einzigen Bildzeile oder einzelner Bildzeilen erfolgen.

In vorteilhafter Weiterbildung der Erfindung können die Aufnahmeeinrichtung des ersten Untersystems und die Kameraeinrichtung des zweiten Untersystems in einem gemeinsamen Gehäuse angeordnet sein, derart, dass ihre jeweiligen Aufnahmebereiche aneinander angrenzen. Das gemeinsame Gehäuse reduziert die Herstellungskosten und vereinfacht eine Montage und gegebenenfalls ein Justieren des Systems für Wartungszwecke und dergleichen. In vorteilhafter Weiterbildung der Erfindung kann an der Kameraeinrichtung des zweiten Untersystems eine Zeigereinrichtung angebracht sein. Diese Zeigereinrichtung kann in Abhängigkeit von einer Position der Aufnahmeeinrichtung des ersten Untersystems detektiert werden. Bei der Zeigereinrichtung kann es sich im einfachsten Fall um einen Stab z.B. aus Metall handeln, der in einen Aufnahmebereich der Aufnahmeeinrichtung des ersten Untersystems hineinragt. Alternativ dazu kann die Zeigereinrichtung aus optischen Mitteln gebildet sein, die einen Punkt oder dergleichen in den Aufnahmebereich der Aufnahmeeinrichtung des ersten Untersystems hineinprojizieren. Entsprechend wird eine Information über die Position der zweiten Kameraeinrichtung in dem zweiten Untersystem erhalten, da die relative Position des zweiten Untersystems zu dem ersten Untersystem bekannt ist.

Die Kameraeinrichtung in dem zweiten Untersystem feststehend angeordnet. Eine Verstellbarkeit der Kameraeinrichtung in Verbindung mit motorischen Antrieben, bewegten Kabeln, Sensoren oder dergleichen ist für diesen Fall nicht vorgesehen. Entsprechend zeichnet sich das System durch einen preiswerten, da einfachen und darüber hinaus robusten Aufbau aus. Auch bei einer feststehenden Kameraeinrichtung des zweiten Untersystems lässt sich eine Anpassung an verschieden große Abmessungen eines Körpers vornehmen, indem ansprechend auf die Daten des ersten Untersystems bezüglich der Position des Körpers in dem ersten Untersystem und/oder der bestimmten Dimension des Körpers eine Parameterangleichung bezüglich der Messwerte der Oberflächenstruktur des Körpers durchgeführt wird. Vorteilhafterweise kann dies beispielsweise durch eine Winkeltransformation bezüglich der Messwerte der Oberflächenstruktur des Körpers durchgeführt werden, wonach die von der zweiten Kameraeinrichtung unter einem Winkel erfasste Fläche in eine senkrechte Ebene transformiert wird. Im Ergebnis ergibt sich eine Abbildungskorrektur der Oberflächenstruktur. Beispielsweise ist somit eine Korrektur der Abbildung von Fehlern auf der Oberfläche möglich.

Bei einer bevorzugten Ausführungsform des Systems kann die Position der Kameraeinrichtung in dem zweiten Untersystem relativ zu dem Körper ansprechend auf die Steuersignale der Steuereinheit verstellt werden. Die Verstellung der zweiten Kameraeinrichtung kann profilradial, profiltangential oder profilaxial bezogen auf den zu vermessenden Körper erfolgen. Des weiteren kann ein Winkel einer Aufnahmeachse der Kameraeinrichtung bezogen auf die senkrechte zur Körperoberfläche variiert werden. Somit ergibt sich für die Kameraeinrichtung in dem zweiten Untersystem eine vierfache Verstellmöglichkeit im Raum. Ein jeweils angepasster Abstand der Kameraeinrichtung an verschieden große Körper stellt dabei vorteilhaft eine genaue Auswertung von Bildpunkten der Körperoberfläche sicher. Die Verstellung der Kameraeinrichtung kann entweder manuell durch eine Bedienperson vorgenommen werden, wobei durch die Steuersignale der Steuereinheit ein Soll-Wert für eine gewünschte Kameraposition angezeigt wird. Alternativ kann mittels der Steuersignale der Steuereinheit eine Verstellung der Kameraeinrichtung auch automatisch, z.B. motorisch erfolgen.

In vorteilhafter Weiterbildung der Erfindung kann die elektronische Kameraeinrichtung des zweiten Untersystems in einem Winkel zur Senkrechten der Körperoberfläche geneigt sein. Insbesondere für den Fall, dass dieser Winkel kleiner ist als der Ausfallswinkel in bezug auf den Einfallswinkel des Lichtes, das auf die Körperoberfläche gestrahlt wird, kann das sogenannte Dunkelfeldverfahren für die Oberflächeninspektion angewendet werden. Dieses Verfahren bietet eine ausgezeichnete Kompensation von ansonsten lokal dominanten Aufhellungseffekten bei porösen Materialoberflächen. Die Oberfläche des Körpers kann ergänzend auch mit sonstigen geeigneten Verfahren abgetastet werden.

In vorteilhafter Weiterbildung der Erfindung kann die Steuereinheit mit einer ersten Datenbank gekoppelt sein, in der Daten von Abmessungen für vorbestimmte Körperprofile gespeichert sind. Bei einer Dimensionsbestimmung des Körpers kann das erste Untersystem somit einen bestimmten Körper erkennen, dessen Abmessungen in der ersten Datenbank gespeichert sind. Entsprechend werden die Steuersignale der Steuereinheit in Abhängigkeit dieser Daten, d.h. als eine Funktion der Daten der ersten Datenbank gebildet, um z.B. die Position der zweiten Kameraeinrichtung in dem zweiten Untersystem an die Abmessung des Körpers anzupassen. Bei einer feststehend angeordneten zweiten Kameraeinrichtung des zweiten Untersystems, bzw. bei einer nicht vorgenommenen Verstellung der Kameras bei einer beweglichen Konfiguration, ist aufgrund der Daten der ersten Datenbank ein Abstand zwischen dem Körper und der zweiten Kameraeinrichtung bekannt, was wie voranstehend erläutert Grundlage einer Parameterangleichung gemacht werden kann.

In gleicher Weise kann die Steuereinheit mit einer zweiten Datenbank gekoppelt sein, in der Daten von Qualitätsmerkmalen für vorbestimmte Körperprofile gespeichert sind. Abhängig von den Daten der zweiten Datenbank wird somit dem zweiten Untersystem die Information erteilt, welche Oberflächenbereiche des Körpers mit welchen Qualitätskriterien zu überprüfen sind. Die zweite Datenbank enthält also eine Information darüber, welcher Bereich der Körperoberfläche welche Qualitätsmerkmale erfüllen muss, was entsprechend die Steuersignale der Steuereinheit und letztlich die Auswertung der digitalen Bildverarbeitung der Messwerte des zweiten Untersystems beeinflusst.

In vorteilhafter Weiterbildung der Erfindung lässt sich ein Messwertbereich des zweiten Untersystems bezüglich einer Körperoberfläche manuell durch eine Bedienperson festlegen. Über bekannte Eingabeschnittstellen wie z.B. einen Touch-Screen kann die Bedienperson genau den Bereich der Körperoberfläche des Körpers auswählen, dessen Oberflächenstruktur bestimmt bzw. untersucht werden soll. Die Eingabeschnittstelle kann der Bedienperson z.B. eine Körperquerschnittsansicht anzeigen, innerhalb der die Bedienperson den zu analysierenden Bereich der Körperoberfläche auswählen kann. Ergänzend oder alternativ hierzu lässt sich der Messwertbereich bezüglich der Körperoberfläche als Funktion der in der ersten oder zweiten Datenbank gespeicherten Daten festlegen.

Als Lichtquelle des ersten bzw. zweiten Untersystems eignet sich z.B. eine bekannte Lasereinrichtung. Alternativ dazu kann die Lichtquelle auch aus einem LED-Array bestehen, wobei die lichtemittierenden Dioden eine Strahlung vorbei an einer Abschattungseinrichtung auf die Körperoberfläche abgeben, um darauf eine Lichtkante zu erzeugen. Die Verwendung von lichtemittierenden Dioden (LED) hat gegenüber dem Einsatz von Laser den signifikanten Vorteil von geringeren Herstellungskosten und einer völlig unkritischen Handhabung der LEDs bezüglich der Einhaltung von Gesundheits-Sicherheitsvorschriften.

Als elektronische Kameraeinrichtung für das zweite Untersystem, insbesondere im Zusammenhang mit einer digitalen Bildauswertung, können zweckmäßigerweise CCD-Kameras oder CMOS-Kameras eingesetzt werden, entweder in Form einer Zeilenkamera oder auch in Form einer Flächenkamera. Der Vorteil einer Zeilenkamera gegenüber einer Flächenkamera besteht in einer homogeneren Beleuchtung der Körperoberfläche und in der Aufnahme von nur einer einzigen Zeile, was größere Abzugsgeschwindigkeiten von Endlosprofilen durch das System hindurch zulässt. In einer möglichen Ausführungsform kann eine Flächenkamera gekoppelt mit einem Stroboskop betrieben werden, was eine geeignete Ausleuchtung der zu überprüfenden Körperoberfläche bei gleichzeitig geringem Energieeinsatz sicherstellt.

In Entsprechung zu dem erfindungsgemäßen System umfasst das erfindungsgemäße Verfahren die folgenden Schritte: Bestimmen einer Dimension des Körpers mittels des ersten Untersystems, das zumindest eine Aufnahmeeinrichtung und eine erste Lichtquelle aufweist, wobei durch das erste Untersystem die Position des Körpers in dem ersten Untersystem bestimmt wird; Bestimmen einer Oberflächenstruktur des Körpers mittels des zweiten Untersystems, das zumindest eine elektronische Kameraeinrichtung und eine zweite Lichtquelle aufweist; und Erzeugen von Steuersignalen für einen Betrieb des zweiten Untersystems als Funktion von Daten des ersten Untersystems bezüglich einer Position des Körpers in dem ersten und zweiten Untersystem und/oder der Dimension des Körpers, und als Funktion von Daten des zweiten Untersystems bezüglich der Position der Kameraeinrichtung in dem zweiten Untersystem.

Die Steuersignale für den Betrieb des zweiten Untersystems können zweckmäßigerweise durch die voranstehend genannte Steuereinheit erzeugt werden.

Durch die Kommunikation der beiden Untersysteme miteinander wird ein neuartiges Gesamtsystem geschaffen, welches dem Nutzer eine unerreichte Inspektionssicherheit bietet. Wie voranstehend erläutert, dienen die Daten über die Lage bzw. die Position des Profils in dem zweiten Untersystem, die Art des Profils und die Position der Kameraeinrichtung in dem zweiten Untersystem als Grundlage zum Erzeugen von Steuersignalen, die z.B. von der Steuereinheit für einen Betrieb des zweiten Untersystems gebildet werden. Gegebenenfalls erkennt das erste Untersystem automatisch das Profil des zu vermessenden Körpers aus der ersten Datenbank. Das erste Untersystem erkennt des weiteren die Drehlage und die Position innerhalb des gesamten Systems. Das zweite System kennt entweder selbst seine Kamerastellungen (z.B. im Falle einer fest angeordneten Kameraeinrichtung mit einer vorbestimmten Position) oder die Kameraeinrichtung ist mit einer Zeigereinrichtung versehen, die in das "Blickfeld" der Aufnahmeeinrichtung des ersten Untersystems hineinragt, bzw. die in Form von optischen Mitteln, die einen Punkt oder dergleichen in den Aufnahmebereich der Aufnahmeeinrichtung des ersten Untersystems hineinprojizieren, von dieser Aufnahmeeinrichtung detektiert werden kann. Im Ergebnis bestimmt das erste Untersystem die Kameraposition des zweiten Untersystems und übermittelt dies an die Steuereinheit. Die Bestimmung der Position der Kameraeinrichtung in dem zweiten Untersystem ist ebenfalls durch geeignete Sensoreinrichtungen möglich. Im Anschluss hieran kann das zweite Untersystem die für ihn sichtbaren Profilflächen des Körpers berechnen und ggf. diverse Parameterangleichungen ausführen, die für eine optimale Oberflächeninspektion notwendig sind. Beispielsweise kann das zweite Untersystem einer Bedienperson über eine Schnittstelle mitteilen, an welcher Stelle die zweite Kameraeinrichtung zu positionieren ist. Alternativ hierzu bleibt die Position der Kameraeinrichtung in dem zweiten Untersystem unverändert, wobei das zweite Untersystem die schräg unter einem Winkel beobachtete Fläche in eine senkrechte Ebene transformiert, wodurch sich eine Abbildungskorrektur von Oberflächenfehlern ergibt. Dies ist auch für den Fall sinnvoll, wenn die Kameras manuell verstellt werden, da sich Abbildungsfehler bei jeder gekrümmten Profiloberfläche für die Kamera ergeben.

Das erste Untersystem bestimmt zusätzlich zu der Dimension des Körpers auch die Lage bzw. die Position des Körpers in dem ersten Untersystem. Da im allgemeinen die Ausrichtung des ersten Untersystems relativ zu dem zweiten Untersystem bekannt ist, liefert die Information über die Position des Körpers in dem ersten Untersystem gleichzeitig auch eine Information über die Position des Körpers in dem zweiten Untersystem, was wie voranstehend erläutert für das Verstellen der Kameraeinrichtung(en) in dem zweiten Untersystem ausgenutzt wird.

Der Betrieb des zweiten Untersystems, mit dem die Oberflächenstruktur des Körpers bestimmt wird, auf Grundlage der Daten des ersten Untersystems und der Daten bezüglich der Position der Kameraeinrichtung in dem zweiten Untersystem hat im wesentlichen den Vorteil, dass das zweite Untersystem bei der Vermessung von verschieden großen Körpern nicht zwingend neu zu kalibrieren ist, da das zweite Untersystem wie voranstehend erläutert auf die neuen Körperabmessungen eingestellt werden kann. Bei feststehend angeordneter Kameraeinrichtung des zweiten Untersystems ist eine bessere Auswertung der Messergebnisse der Oberflächenstruktur möglich, da der Lagewinkel zwischen der zweiten Kameraeinrichtung und dem Körper als auch der Abstand zwischen der zweiten Kameraeinrichtung zum Körper herausgerechnet werden kann. Des weiteren kann der Messwertbereich des zweiten Untersystems automatisch auf Grundlage der Daten des ersten Untersystems festgelegt werden, z.B. beim Detektieren eines vorbestimmten Körperprofils, ohne dass dies eine Bedienperson manuell einstellen muss.

Das erste Untersystem kann auch zweigeteilt sein, dergestalt, daß in einem ersten Teil lediglich die Dimension des Körpers bestimmt wird, wobei in einem weiteren Teil die Lage des Körpers relativ zu diesem Teil bestimmt wird. Hiernach ist das erste Untersystem aus zwei Teilsystemen aufgebaut, die jedoch zusammengefasst die gleiche Information bzw. Daten liefern wie das voranstehend erläuterte einteilige erste Untersystem.

Das erfindungsgemäße Computer-Programm weist Programm-Code-Mittel auf, um zumindest einen Teil eines Schrittes des voranstehend genannten Verfahrens durchzuführen, insbesondere zumindest einen Teil des Schrittes, in dem die Steuersignale als Funktion der Daten der ersten Datenbank und/oder als Funktion der zweiten Datenbank erzeugt werden. Dieses Computer-Programm wird auf einem Computer oder einer entsprechenden Recheneinheit zur Ausführung gebracht.

Die Untersysteme können mit getrennten Programmen betrieben werden. Alternativ dazu können die Programme in beliebiger Kombination miteinander "verschmolzen" bzw. kombiniert sein. Des weiteren können die Systeme in beliebig viele weitere Untersysteme unterteilt sein. Beispielsweise kann die Steuereinheit getrennt von einer Datenbankanbindung und einer Parameteranpassungseinheit sein. Die Programme können ferner auf einer Rechnereinheit oder auf beliebig vielen Rechnereinheiten verteilt laufen. Die Eingabeanbindung kann ebenfalls ein Untermodul oder ein eigenständiges Programm sein.

Das erfindungsgemäße Computer-Programm-Produkt weist Programm-Code-Mittel auf, die auf einem Computer-lesbaren Datenträger gespeichert sind, um das voranstehend beschriebene Verfahren durchzuführen, wenn das Computer-Programm-Produkt auf einem Computer oder einer entsprechenden Recheneinheit ausgeführt wird, und insbesondere den Schritt, in dem die Steuersignale als Funktion der Daten der ersten Datenbank und/oder als Funktion der zweiten Datenbank erzeugt werden. Die Programm-Code-Mittel sind vorzugsweise auf einem Computer-lesbaren Datenträger gespeichert. Als geeignete Datenträger können EEPROMS und Flash-Memories, aber auch CD-ROMs, Disketten, Festplattenlaufwerke oder dergleichen verwendet werden.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt eine prinzipiell stark vereinfachte Ansicht eines erfindungsgemäßen Systems.
- Figur 2: zeigt eine Seitenansicht einer Extrusionsstraße mit dem System von Figur 1.
- Figur 3: zeigt vereinfacht eine elektronische Kameraeinrichtung mit einer korrespondierenden Lichtquelle des ersten Untersystems.
- Figur 4: zeigt eine vereinfachte perspektivische Ansicht des Aufbaus des ersten Untersystems in einer alternativen Ausführungsform.
- Figur 5: zeigt den Aufbau des ersten Untersystems von Figur 4 in einer seitlichen Querschnittsansicht.
- Figur 6: zeigt die Einzelheit Z von Figur 5.
- Figur 7: zeigt eine vereinfachte seitliche Schnittansicht des Aufbaus des zweiten Untersystems.
- Figur 8: zeigt das zweite Untersystem von Figur 7 in einer perspektivischen Darstellung.
- Figur 9: zeigt eine Anordnung des ersten und zweiten Untersystems relativ zueinander.
- Figur 10: zeigt eine Schrittabfolge eines erfindungsgemäßen Verfahrens.
- Figur 11: zeigt vereinfacht eine Winkeltransformation bei dem zweiten Untersystem.

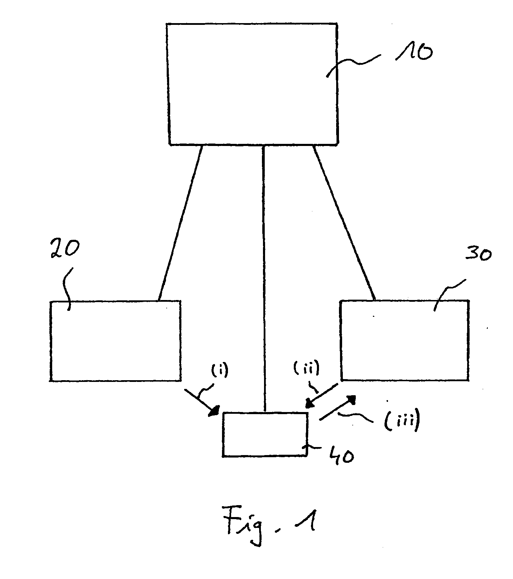

In Figur 1 ist symbolisch vereinfacht ein erfindungsgemäßes System 10 zum Vermessen eines Körpers gezeigt. Das System 10 weist mindestens ein erstes Untersystem 20 und mindestens ein zweites Untersystem 30 auf. Das System 10 umfasst des weiteren eine Steuereinheit 40, die Steuersignale für einen Betrieb des zweiten Untersystems 30 erzeugt. Wie voranstehend erläutert, kann es sich bei der Steuereinheit (40) um ein geeignetes elektronisches Bauelement handeln. Alternativ hierzu kann die Steuereinheit auch als Programmroutine verstanden werden, die auf einem beliebigen Rechner zur Ausführung gebracht wird, bzw. die in dem ersten Untersystem 20 oder in dem zweiten Untersystem 40 geeignet implentiert sein kann.

Das erste Untersystem 20 dient zum Bestimmen einer Dimension eines Körpers, und weist hierzu in bekannter Weise zumindest eine erste elektronische Kameraeinrichtung und eine erste Lichtquelle auf. Die erste Lichtquelle bestrahlt den Körper aus einer im wesentlichen zur Körperoberfläche senkrechten Richtung, wobei die erste elektronische Kameraeinrichtung derart angeordnet ist, dass ihre Aufnahmeachse einen Winkel mit der Senkrechten zur Körperoberfläche bzw. zu einer Achse, entlang der der Körper an der ersten Kameraeinrichtung vorbeibewegt wird, einschließt. Eine solche Anordnung von Lichtquelle und elektronischer Kameraeinrichtung eignet sich für eine digitale Bildverarbeitung, wobei die Abmessungen des Körpers z.B. durch Triangulation bestimmt werden können.

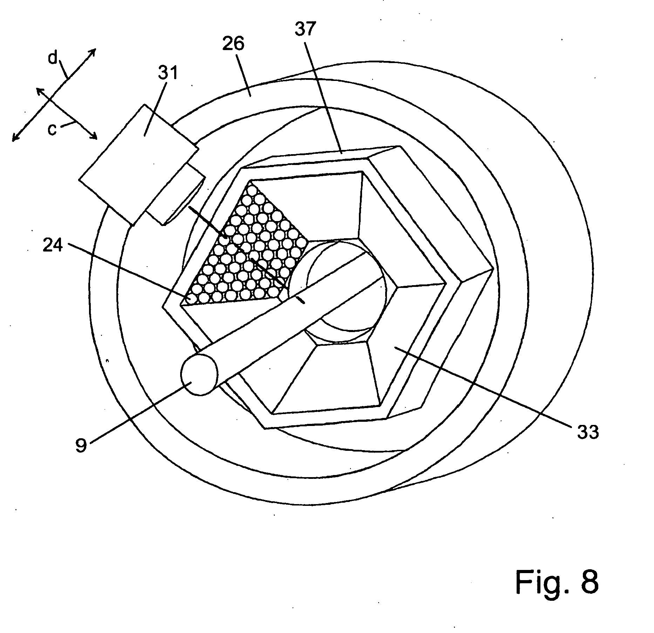

Das zweite Untersystem dient zum Bestimmen einer Oberflächenstruktur des Körpers, und weist hierzu zumindest eine zweite elektronische Kameraeinrichtung und eine zweite Lichtquelle auf. In bekannter Weise kann die zweite Lichtquelle als sogenannter Lichtring ausgebildet sein (vgl. Figur 8), wodurch eine gleichmäßige Ausleuchtung des Körpers von allen Seiten her sichergestellt ist. Mit geeigneter Anordnung der zweiten elektronischen Kameraeinrichtung relativ zu der zweiten Lichtquelle lässt sich die Oberfläche des Körpers mit dem bekannten Prinzip der Dunkelfeldtechnik analysieren.

Ein wesentliches Merkmal des erfindungsgemäßen Systems 10 ist durch eine Datenkommunikation zwischen dem ersten Untersystem 20 und dem zweiten Untersystem 30 gegeben, wie nachstehend im Detail erläutert.

Zum Bestimmen seiner Dimension wird ein Körper durch das erste Untersystem hindurchgeführt. Dabei werden sowohl die Dimension des Körpers als auch seine Position innerhalb des ersten Untersystems 20 bestimmt. Das erste Untersystem 20 steht mit der Steuereinheit 40 in Verbindung, wobei die Daten des ersten Untersystems 20 bezüglich Lage und Abmessung des Körpers an die Steuereinheit 40 übermittelt werden. In Figur 1 ist dies durch einen Pfeil (i) gezeigt. Die Steuereinheit 40 steht des weiteren in Verbindung mit dem zweiten Untersystem 30. Durch den Pfeil (ii) ist angedeutet, dass die Steuereinheit 40 von dem zweiten Untersystem 30 eine Information über die Position der zweiten Kameraeinrichtung in dem zweiten Untersystem 30 erhält. Auf Grundlage der Daten (i) und (ii) des ersten und des zweiten Untersystems 20, 30 erzeugt die Steuereinheit Steuersignale, die an das zweite Untersystem 30 ausgegeben werden (Pfeil (iii) in der Figur 1). Somit wird das zweite Untersystem in Abhängigkeit der Daten (i) des ersten Untersystems bezüglich einer Position des Körpers innerhalb des ersten Untersystems und der Daten (ii) des zweiten Untersystems bezüglich der Position seiner Kameraeinrichtung betrieben.

Für eine exakte und zuverlässige Inspektion der Oberfläche eines Körpers mittels einer digitalen Bildverarbeitung ist es sehr wichtig, sowohl den Abstand der zweiten elektronischen Kameraeinrichtung zu dem Körper als auch den Winkel des Aufnahmebereiches dieser Kameraeinrichtung zu der Körperoberfläche zu kennen. Nur in Kenntnis dieser Information lassen sich die Bildpunkte der Körperoberfläche genau auswerten, um daraus Rückschlüsse auf die Oberflächenstruktur zu ziehen. Mittels der Steuersignale der Steuereinheit lässt sich ein radialer Abstand der zweiten Kameraeinrichtung relativ zu dem Körper manuell oder motorisch verändern. Des weiteren kann die zweite Kameraeinrichtung um den Körper herum gedreht werden, so dass verschiedene Flächen des Körpers von der zweiten Kameraeinrichtung erfasst werden können. Ebenso kann der Winkel zwischen Körperachse und einer Aufnahmeachse der Kameraeinrichtung verändert werden. Alternativ dazu kann bei feststehender Kameraeinrichtung eine Parameterangleichung bezüglich der Messwerte der Oberflächenstruktur des Körpers durchgeführt werden, wodurch das zweite Untersystem 30 ebenfalls an verschiedene Körper angepasst wird.

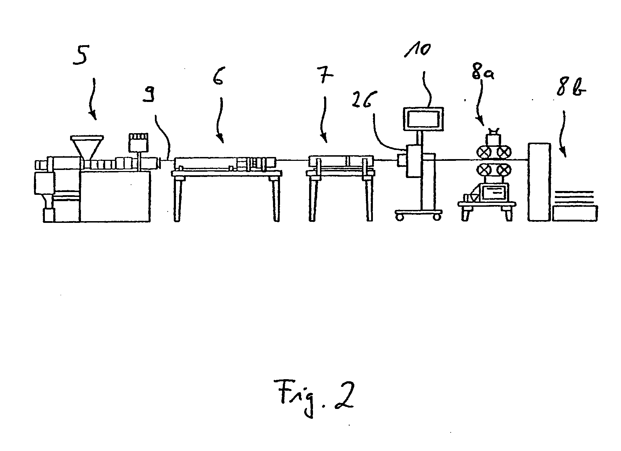

Das erfindungsgemäße System 10 lässt sich ohne weiteres in einem kontinuierlichen Herstellungsprozess integrieren, wie es in Figur 2 gezeigt ist. Eine herkömmliche Extrusionsanlage umfasst einen Extruder 5 mit Formwerkzeug, Kühlstationen 6, 7, eine Abzugseinheit 8a und eine Schneidvorrichtung 8b. Der Extruder 5 extrudiert einen Körper 9, der im Anschluss hieran die Kühlstationen 6, 7 durchläuft und letztlich durch die Schneideinrichtung 8b in gewünschter Länge abgetrennt wird.

Das erfindungsgemäße System lässt sich z.B. ohne weiteres zwischen der Kühlstation 7 und der Abzugseinheit 8a in die Extrusionsanlage einfügen. Ein Gehäuse 26 des Systems 10 weist dabei Durchgangsöffnungen auf, durch die hindurch der extrudierte Körper 9 von der Abzugseinheit 8a abgezogen wird. Für einen kompakten Aufbau des erfindungsgemäßen Systems ist es vorteilhaft, dass das erste Untersystem 20 und das zweite Untersystem 30 in dem gemeinsamen Gehäuse 26 untergebracht sind. Durch die Anordnung des Systems 10 als Element der Extrusionsanlage ist es möglich, eine Qualitätskontrolle des extrudierten Körpers 9 in bezug auf Toleranzen und Oberflächenqualität direkt bei der Herstellung vorzunehmen. Durch eine geeignete Verschaltung des Systems mit der Schneideinrichtung 8b können somit auch Bereiche des Körpers 9, die Fehlstellen aufweisen, gezielt herausgeschnitten werden.

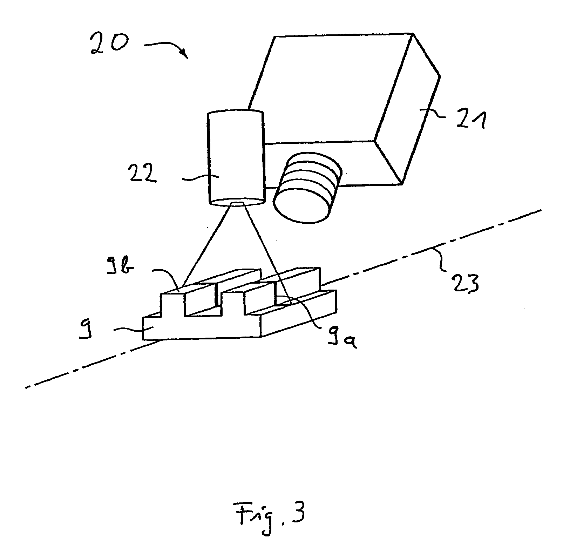

In den Figuren 3 bis 6 ist ein möglicher Aufbau und das Funktionsprinzip des ersten Untersystems 20 erläutert.

Zum Bestimmen der Dimension des Körpers 9 mittels digitaler Bildverarbeitung weist das erste Untersystem 20 eine Aufnahmeeinrichtung in Form einer elektronischen Kameraeinrichtung 21 auf, deren Aufnahmebereich auf den Körper gerichtet ist. Des weiteren umfasst das erste Untersystem 20 eine erste Lichtquelle 22 in Form eines Lasers, der auf den Körper 9 gerichtet ist und auf der Oberfläche des Körpers 9 eine Lichtkante 9a erzeugt. Die erste elektronische Kameraeinrichtung 21 mit ihrer Aufnahmeachse in einem Winkel zur Senkrechten bezogen auf eine Achse 23, entlang der der Körper 9 bewegt wird, angeordnet. Somit lassen sich die Bildpunkte der Lichtkante 9a mittels des bekannten Verfahren der Triangulation auswerten, um dadurch die Dimensionen des Körpers 9 zu bestimmen. Für ein Vermessen des Körpers 9 von verschiedenen Seiten ist es vorteilhaft, eine Mehrzahl der elektronischen Kameraeinrichtungen 21 vorzusehen. Beispielsweise können vier Kameraeinrichtungen 21 entlang einer Kreisform um die Achse 23 herum angeordnet sein, um einen Aufnahmebereich entlang des Umfangs des Körpers 9 sicherzustellen. Es versteht sich, dass hierbei auch eine Mehrzahl von ersten Lichtquellen 22 vorgesehen ist, wobei eine erste Lichtquelle jeweils einer der ersten elektronischen Kameraeinrichtungen 21 zugeordnet ist.

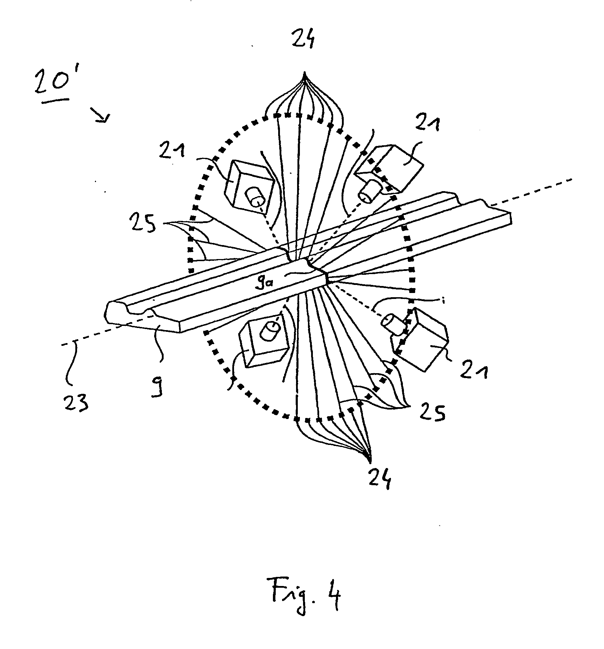

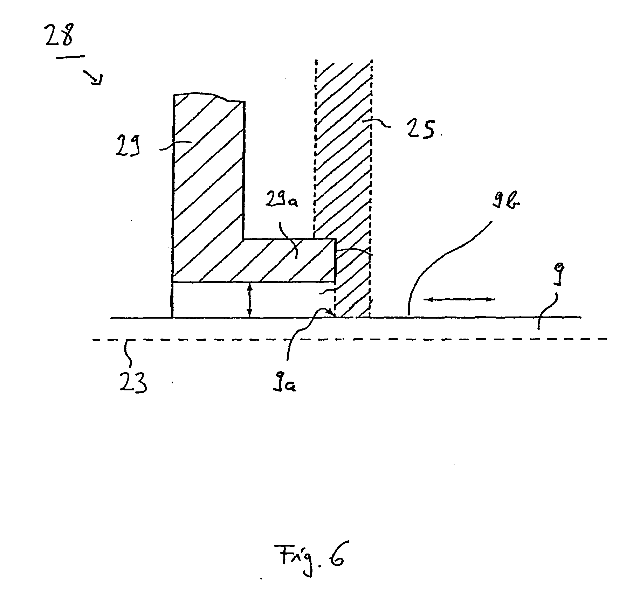

In den Figuren 4 bis 6 ist eine alternative Ausführungsform des ersten Untersystems 20 gezeigt. In gleicher Weise wie bei der Ausführungsform von Figur 3 sind entlang einer Kreisform um die Achse 23 herum vier erste elektronische Kameraeinrichtungen 21 vorgesehen, die mit ihrem Aufnahmebereich auf den Körper 9 gerichtet sind. Der Körper 9 wird entlang der Achse 23 an den ersten elektronischen Kameraeinrichtungen 21 vorbeibewegt. Im Unterschied zu der Ausführungsform von Figur 3 ist die erste Lichtquelle aus einer Mehrzahl von lichtemittierenden Dioden (kurz LED) 24 gebildet, die ebenfalls kreisförmig um die Achse 23 herum angeordnet sind. Die LEDs 24 geben jeweils eine Strahlung 25 vorbei an einer Abschattungseinrichtung (Figur 6) in Richtung des Körpers 9 ab, so dass in gleicher Weise wie bei dem Laser eine Lichtkante 9a auf der Oberfläche des Körpers 9 gebildet wird. In bekannter Weise lässt sich somit durch die ersten elektronischen Kameraeinrichtungen 21 mittels Triangulation die Dimension des Körpers 9 bestimmen. Gemäß der Darstellung von Figur 4 wird die sichtbare Außenkontur des Körpers 9 erfasst und auf Grundlage dessen eine nachfolgende Datenauswertung durchgeführt.

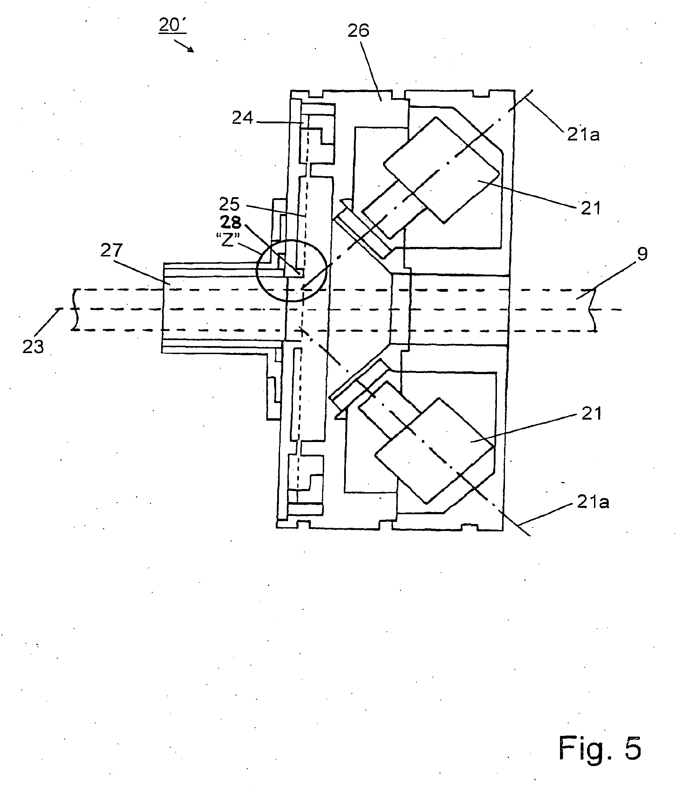

In Figur 5 ist das erste Untersystem 20 von Figur 4 in einer seitlichen Querschnittsansicht gezeigt. Die ersten elektronischen Kameraeinrichtungen 21 sind mit ihrer Aufnahmeachse 21 a in einem Winkel schräg zur Senkrechten bezüglich der Achse 23 in einem Gehäuse 26 des ersten Untersystems 20 angeordnet. Das Gehäuse 26 weist eine Durchgangsöffnung 27 auf, durch die hindurch sich der Körper 9 entlang der Achse 23 bewegen lässt. Des weiteren sind in dem Gehäuse 26 die LEDs 24 in Kreisform um die Achse 23 herum angeordnet, wobei die Strahlung 25 der LEDs 24 jeweils in Richtung des Körpers 9 gerichtet ist. In dem Gehäuse 26 ist in der Nähe der Oberfläche des Körpers 9 eine Abschattungseinrichtung 28 ausgebildet, die einen Teil der Strahlung 25 der LEDs 24 ausblendet, um auf der Körperoberfläche eine sogenannte scharfe Lichtkante 9a in gleicher Weise wie ein Laser zu bilden. Von der Lichtkante 9a reflektierte Strahlung wird von den ersten elektronischen Kameraeinrichtungen 21 jeweils aufgenommen und in entsprechende Bildpunkte umgewandelt, wonach sich eine digitale Bildverarbeitung auf Grundlage einer Triangulation anschließt, um die Körperdimension zu bestimmen.

Figur 6 zeigt die Einzelheit "Z" der Figur 5, um die Abschattungseinrichtung 28 zu verdeutlichen. Eine Abdeckplatte 29 des Gehäuses 26 weist eine Auskragung 29a auf, die in den Strahlengang der Strahlung 25 hineinreicht. Damit wird ein Teil der Strahlung 25 ausgeblendet, so dass auf der Oberfläche des Körpers 9 die sogenannte scharfe Lichtkante 9a erzeugt wird. Unter dem Begriff "Lichtkante" ist erfindungsgemäß ein scharfer Kontrast zwischen einem durch die Strahlung 25 bestrahlten Bereich der Oberfläche des Körpers 9 und einem dazu angrenzenden nicht bestrahlten Bereich der Oberfläche zu verstehen. Es ist zu verstehen, dass das Merkmal der sogenannten Lichtkante nicht nur auf den Wellenlängenbereich des sichtbaren Lichts bezogen ist. Der Aufnahmebereich der ersten elektronischen Kameraeinrichtungen 21 (in Figur 6 nicht gezeigt) ist exakt auf die Lichtkante 9a ausgerichtet, so dass ein zuverlässiges und störungsfreies Empfangen von Reflexionspunkten auf der Lichtkante 9a durch die Kameraeinrichtungen 21 sichergestellt ist. In Figur 6 ist durch einen Pfeil die Bewegungsrichtung des Körpers 9 entlang der Achse 23 angedeutet. Beim Bewegen des Körpers 9 entlang der Achse 23 fällt somit die Strahlung 25 fortwährend auf eine Oberfläche 9b des Körpers 9, so dass sich der Körper 9 dadurch lückenlos vermessen lässt.

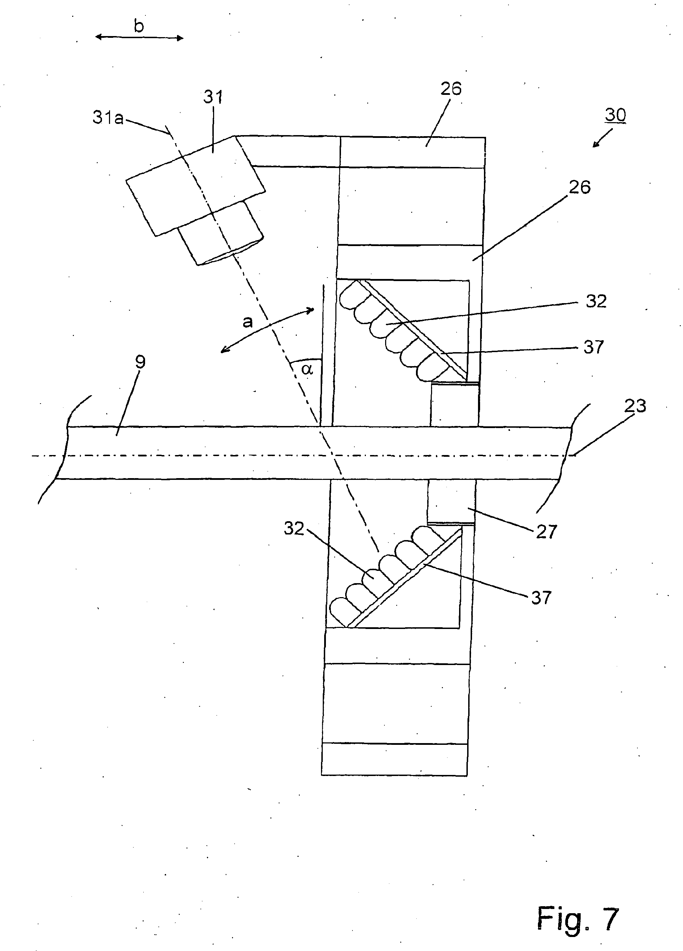

In den Figuren 7 und 8 ist ein Aufbau des zweiten Untersystems 30 gezeigt. Eine Mehrzahl von zweiten elektronischen Kameraeinrichtungen 31 (in Figur 7 ist nur eine Einheit gezeigt) ist ring- bzw. kreisförmig um die Achse 23 herum in dem Gehäuse 26 des Systems 10 angeordnet. Die zweiten elektronischen Kameraeinrichtungen 31 sind dabei derart in dem Gehäuse 26 angeordnet, das eine Aufnahmeachse 31 a der jeweiligen Kameraeinrichtungen 31 einen Winkel α mit einer Ebene einschließt, die senkrecht zu der Bewegungsachse (23) des Körpers ist.

Die Kameraeinrichtungen 31 sind relativ zu der Achse 23 derart verstellbar, dass der Winkel α vergrößert bzw. verkleinert wird (Pfeil a in Figur 7). Ergänzend lassen sich die Kameraeinrichtungen 31 auch profilaxial, d.h. parallel zu der Achse 23 verstellen (Pfeil b in Figur 7).

Das zweite Untersystem 30 umfasst des weiteren eine zweite Lichtquelle 32 in Form einer Mehrzahl von lichtemittierenden Dioden (LED), die in dichtgepackter Form auf einem Ringkörper 37 angebracht sind. Indem der Körper 9 durch den Ringkörper 37 hindurchgeführt wird, ist eine Bestrahlung des Körpers 9 durch die LEDs 32 von allen Seiten her sichergestellt. Der Winkel α zwischen der Aufnahmeachse 31a der zweiten Kameraeinrichtung 31 und die Ausrichtung des Ringkörpers 37 bzw. der LEDs 32 relativ zu der Achse 23 sind dabei geeignet so gewählt und verstellbar, dass eine Aufnahme der Oberfläche des Körpers 9 mit der elektronischen Kameraeinrichtung 31 nach dem bekannten Prinzip der Dunkelfeldtechnik oder jeder anderen vorteilhaft erzielbaren Bildcharakteristik erfolgen kann.

In Figur 8 ist die Ausführungsform von Figur 7 mit einem Ringkörper 37 mit hexagonaler Grundform dargestellt. Die Halterung für die LEDs 32 ist in sechs trapezförmige Segmente 33 unterteilt, welche jeweils um einen Winkel von 45° gegenüber der Achse 23 geneigt sind. Es wird somit ein vereinfachter Herstellungsprozess der Diodenanordnung ermöglicht. Andere polygonale Formen sind ebenfalls für den Ringkörper geeignet. Zur Feinanpassung an verschiedene Durchmesser des zu vermessenden Körpers 9 ist eine profilaxiale Verstellung der relativen Positionen des Lichtringes, d.h. der LEDs 32 und auch der jeweiligen elektronischen Kameraeinrichtungen 31 möglich. Auf diese Weise kann eine Konstanz der Ausleuchtungscharakteristik erreicht werden.

Die zweite elektronische Kameraeinrichtung 31 des zweiten Untersystems 30 lässt sich manuell und/oder elektromotorisch sowohl profilradial als auch profiltangential in dem Gehäuse 26 verstellen. Durch die profilradiale Verstellung (Pfeil c in Figur 8) lässt sich der Abstand der zweiten Kameraeinrichtung 31 zu dem Körper 9 verringern bzw. vergrößern, so dass auch bei verschieden großen Körpern der Abstand zwischen dem Körper und der Kameraeinrichtung 31 gleichbleibend ist. Des weiteren können durch die profiltangentiale Verstellung (Pfeil d in Figur 8) der Kameraeinrichtung, d.h. durch ein Verdrehen der Kameraeinrichtung entlang des kreisförmigen Gehäuses 26 verschiedene Umfangsabschnitte des Körpers 9 vermessen werden.

Die Kameraeinrichtungen 21 des ersten Untersystems 20 lassen sich in Anpassung an jeweils verschieden große Körper, die zu vermessen sind, in gleicher Weise wie die Kameraeinrichtungen 31 des zweiten Untersystems 30 verstellen. Anders ausgedrückt, lassen sich die Kameraeinrichtungen beider Untersysteme sowohl bezüglich des Winkels ihrer Aufnahmeachse zu einer senkrechten der Achse 23 als auch profilradial, profiltangential und profilaxial verstellen. Daraus ergeben sich für die entsprechenden Kameraeinrichtungen jeweils vier Freiheitsgrade im Raum.

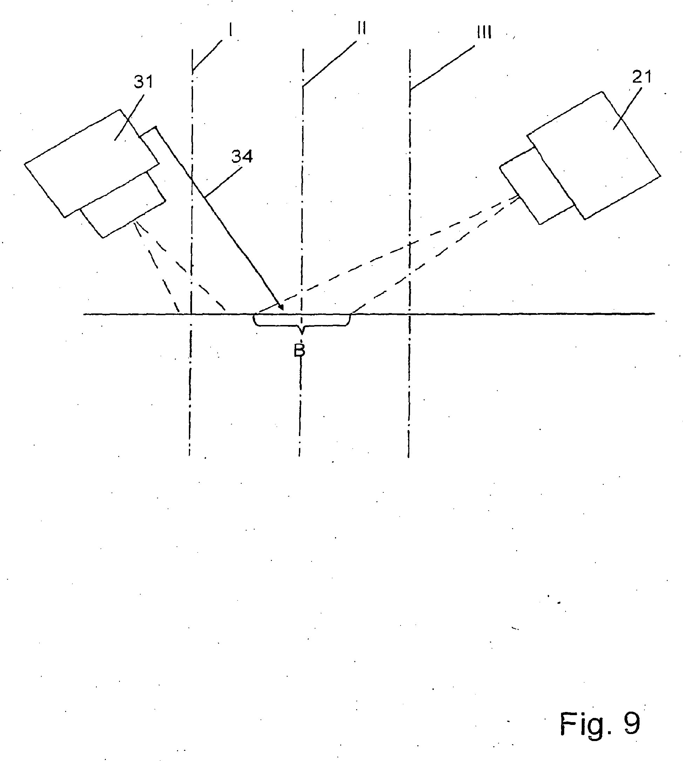

Die ersten Kameraeinrichtungen 21 des ersten Untersystems 20 und die zweiten Kameraeinrichtungen 31 des zweiten Untersystems 30 sind zweckmäßigerweise beide in dem Gehäuse 26 angeordnet. Hierdurch ergeben sich vorteilhaft kompakte Außenabmessungen des Systems 10. Die Anordnung der Kameraeinrichtungen 21, 31 ist so gewählt, dass ihre jeweiligen Aufnahmebereiche aneinander angrenzen. In Figur 9 ist dies durch die Ebenen I bis III kenntlich gemacht. In Abweichung von der in Fig. 9 gezeigten Konfiguration können Aufnahmeachsen der Kameraeinheiten der beiden Untersysteme dazu auch in beliebigen Raumrichtungen angeordnet sein. Die erste elektronische Kameraeinrichtung 21 des ersten Untersystems 20 erfasst einen Aufnahmebereich B, in dem die Ebene I liegt. Die Ebene I grenzt an die Ebene II an, die in dem Aufnahmebereich der zweiten elektronischen Kameraeinrichtung 31 des zweiten Untersystems 30 liegt. An der zweiten elektronischen Kameraeinrichtung 31 ist eine (stark vereinfacht gezeigtes) Zeigereinrichtung 34 oder dergleichen befestigt, die in Abhängigkeit der Position der zweiten Kameraeinrichtung 31 in den Aufnahmebereich B der ersten Kameraeinrichtung 21 hineinragen kann. Im einfachsten Fall kann es sich bei der Zeigereinrichtung um einen metallischen Stab oder dergleichen handeln, der wie erläutert in den Aufnahmebereich B hineinragt. Alternativ hierzu kann die Zeigereinrichtung aus optischen Mitteln gebildet sein, die einen Punkt oder dergleichen in den Aufnahmebereich B hineinprojiziert.

Falls die Zeigereinrichtung 34 bzw. ihre Projektion in den Aufnahmebereich B hineinragt und von der ersten elektronischen Kameraeinrichtung 21 entsprechend detektiert wird, lässt dies einen Rückschluss auf die Position der zweiten Kameraeinrichtung 31 innerhalb des zweiten Untersystems 30 zu. Dies gilt in gleicher Weise für den Fall, dass die zweite elektronische Kameraeinrichtung 31 in dem zweiten Untersystem 30 entlang der Kreisanordnung verstellt wird, so dass das Zeigerelement 34 in den Aufnahmebereich einer anderen elektronischen Kameraeinrichtung 21 gelangt. Bei einer Mehrzahl von zweiten Kameraeinrichtungen mit entsprechenden Zeigerelementen ist es durch eine geeignete Codierung oder dergleichen der Zeigerelemente bzw. ihrer Projektionen möglich, mittels einer Detektion durch die ersten elektronischen Kameraeinrichtungen eine genaue Information über die Position der zweiten Kameraeinrichtungen in den zweiten Untersystem 30 zu erhalten. Die optische Kodierung einer Projektion einer jeweiligen Zeigereinrichtung kann z.B. durch Darstellung von Buchstaben, Zahlen, einer verschiedenen Anzahl von Punkten oder dergleichen erzielt werden.

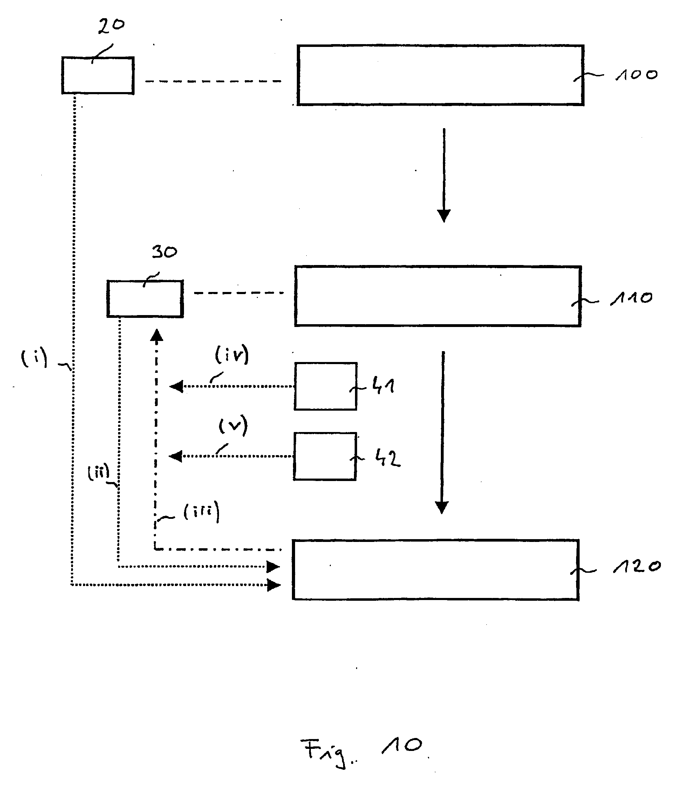

Figur 10 verdeutlicht in einem Flussdiagramm die Schrittabfolge des erfindungsgemäßen Verfahrens. In einem Schritt 100 wird eine Dimension des Körpers mittels des ersten Untersystems 20 bestimmt. Des weiteren wird in einem Schritt 110 eine Oberflächenstruktur des Körpers mittels des zweiten Untersystems 30 bestimmt. Der Begriff Oberflächenstruktur ist in diesem Zusammenhang sehr breit auszulegen, und umfasst eine jegliche Veränderung der Oberfläche in Form von Bohrlöchern, einer Beflockung, einem Aufdruck oder sonstigen Strukturierungen, die von einer ansonsten völlig glatten Oberfläche des Körpers abweichen. In einem nächsten Schritt 120 werden Steuersignale für einen Betrieb des zweiten Untersystems erzeugt. Diese Steuersignale sind eine Funktion von Daten (i) des ersten Untersystems 20 bezüglich einer Position des Körpers 9 in dem ersten Untersystem 20 und/oder der Dimension des Körpers, die in dem ersten Untersystem 20 bestimmt wird, und von Daten (ii) des zweiten Untersystems bezüglich der Position der zweiten Kameraeinrichtung 31 innerhalb des zweiten Untersystems 20. Der Pfeil (iii) macht deutlich, dass die erzeugten Steuersignale wiederum den Betrieb des zweiten Untersystems 30 steuern, bspw. im Hinblick auf eine Verstellung der Kameraposition oder auf ein Durchführen einer Parameterangleichung.

Die in Figur 10 nicht gezeigte Steuereinheit 40, in der die Steuersignale (iii) erzeugt werden, kann mit einer ersten Datenbank 41 und/oder einer zweiten Datenbank 42 gekoppelt sein. In der ersten Datenbank sind Daten (iv) von Abmessungen für vorbestimmte Körperprofile gespeichert. In der zweiten Datenbank 42 sind Daten (v) von Qualitätsmerkmalen für vorbestimmte Körperprofile gespeichert. Die Zuordnung der Datenpfeile (iv) und (v) zu dem Pfeil (iii) symbolisiert, dass die Steuersignale der Steuereinheit 40 ggf. auch eine Funktion der Daten der ersten bzw. zweiten Datenbank sind. Anders ausgedrückt, kann der Betrieb des zweiten Untersystems 30 unter Berücksichtigung der Daten der ersten Datenbank 40 und/oder unter Berücksichtigung der Daten der zweiten Datenbank 41 durchgeführt werden.

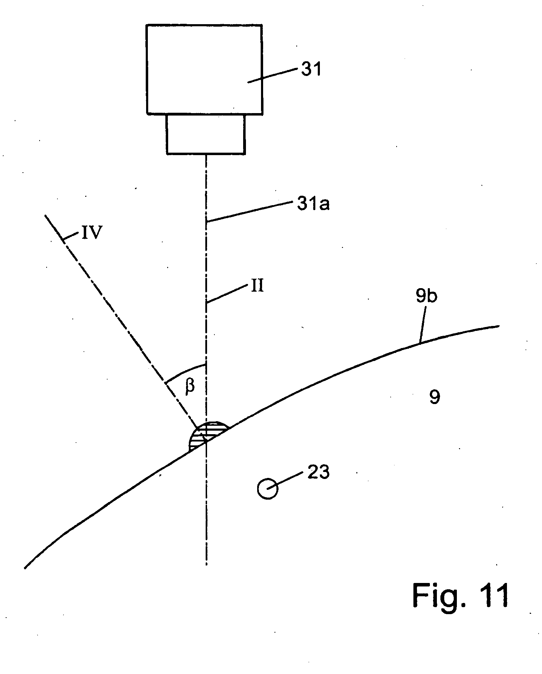

Figur 11 zeigt die Durchführung der voranstehend genannten Parameterangleichung bzw. einer Winkeltransformation. In Fig. 11 ist das zweite Untersystem 30 in einem Querschnitt gezeigt, wobei die Achse 23 senkrecht zur Zeichnungsebene verläuft. Auf einer Oberfläche 9b des Körpers 9 ist eine Fehlstelle in Form einer Erhebung 35 gebildet, die von der elektronischen Kameraeinrichtung 31 erfasst wird. Eine mögliche Parameterangleichung kann hierbei in einer Winkeltransformation bezüglich der Messwerte der Oberflächenstruktur des Körpers 9 bestehen, wonach ein von der Kameraeinrichtung erfasster Punkt der Körperoberfläche 9b derart transformiert wird, dass die Aufnahmeachse 31 a der Kameraeinrichtung virtuell in einer Ebene IV liegt, die senkrecht zu der Körperoberfläche am Aufnahmepunkt ist. Im gezeigten Fall schließt die Aufnahmeachse 31 a mit der Ebene IV einen Winkel β ein. Im Ergebnis wird eine vorteilhafte Abbildungskorrektur der Oberflächenstruktur des Körpers 9 erzielt, im gezeigten Fall der Erhebung 35.

In Ergänzung zu den voranstehend erläuterten Ausführungsformen können auch mehrere Untersysteme 20 hintereinander angeordnet sein, um die Dimensionsbestimmung des Körpers 9 noch genauer durchzuführen. Des weiteren können bei dem zweiten Untersystem 30 eine Mehrzahl der zweiten elektronischen Kameraeinrichtungen 31 manuell oder automatisch verstellbar in dem Gehäuse 26 angeordnet sein. Neben einer Positionsbestimmung dieser Kameraeinrichtungen über die Zeigerelemente 34 ist es auch möglich, Sensoreinrichtungen in dem Gehäuse 26 vorzusehen, die eine Position der Kameraeinrichtungen 31 detektieren und entsprechend an die Steuereinheit 40 ausgeben.

## Patentansprüche

1. System (10) zum Vermessen eines Körpers (9) und zum Überwachen der Oberfläche des Körpers (9), mit
- zumindest einem ersten Untersystem (20), mit dem eine Dimension des Körpers (9) und eine Position des Körpers innerhalb des ersten Untersystems (20) bestimmt wird, wobei das erste Untersystem (20) zumindest eine Aufnahmeeinrichtung (21) und eine erste Lichtquelle (22, 24) aufweist, und mit
- zumindest einem zweiten Untersystem (30), mit dem eine Oberflächenstruktur des Körpers (9) bestimmt wird, wobei das zweite Untersystem (30) zumindest eine elektronische Kameraeinrichtung (31) und eine zweite Lichtquelle (32) umfasst, und mit
- einer Steuereinheit (40), die Steuersignale (iii) für einen Betrieb des zweiten Untersystems (30) als Funktion von Daten (i) des ersten Untersystems (20) bezüglich der Position des Körpers (9) in dem ersten Untersystem und/oder der Dimension des Körpers (9) und von Daten (ii) des zweiten Untersystems (30) bezüglich der Position der Kameraeinrichtung (31) in dem zweiten Untersystem (30) erzeugt.

2. System (10) nach Anspruch 1, bei dem die Position der Kameraeinrichtung (31) in dem zweiten Untersystem (30) vor einer Inbetriebnahme des Systems vorbestimmt ist oder durch eine Sensoreinrichtung bestimmbar ist.

3. System (10) nach Anspruch 2 oder 3, bei dem die Aufnahmeeinrichtung des ersten Untersystems (20) eine elektronische Kameraeinrichtung (21) ist, die zusammen mit der elektronischen Kameraeinrichtung (31) des zweiten Untersystems (30) durch eine gemeinsame elektronische Kameraeinrichtung gebildet ist.

4. System (10) nach einem der Ansprüche 1 bis 3, bei dem die Aufnahmeeinrichtung (21) des ersten Untersystems (20) und die Kameraeinrichtung (31) des zweiten Untersystems (30) derart in einem gemeinsamen Gehäuse angeordnet sind, dass ihre Aufnahmebereiche aneinander angrenzend sind, wobei an der Kameraeinrichtung (31) des zweiten Untersystems (30) eine Zeigereinrichtung (34) angebracht ist, die in Abhängigkeit von einer Position der Kameraeinrichtung von der Aufnahmeeinrichtung (21) des ersten Untersystems (20) detektierbar ist, um die Position der Kameraeinrichtung (31) in dem zweiten Untersystem zu bestimmen.

5. System (10) nach einem der Ansprüche 1 bis 4, bei dem die Position der Kameraeinrichtung (31) in dem zweiten Untersystem (30) relativ zu dem Körper (9) ansprechend auf die Steuersignale der Steuereinheit (40) verstellbar ist.

6. System (10) nach einem der Ansprüche 1 bis 5, bei dem beim Betrieb des zweiten Untersystems (30) ansprechend auf die Daten des ersten Untersystems (20) eine Parameterangleichung bezüglich der Meßwerte der Oberflächenstruktur des Körpers (9) durchführt wird.

7. System (10) nach Anspruch 6, bei dem beim Betrieb des zweiten Untersystems (30) eine Winkeltransformation bezüglich der Meßwerte der Oberflächenstruktur des Körpers (9) durchgeführt wird, wonach ein von der Kameraeinrichtung (31) erfasster Punkt einer Körperoberfläche derart transformiert wird, dass die Aufnahmeachse (31 a) der Kameraeinrichtung (31) virtuell in einer Ebene (IV) liegt, die senkrecht zu der Körperoberfläche am Aufnahmepunkt ist.

8. System (10) nach einem der Ansprüche 1 bis 7, bei dem die Steuereinheit (40) mit einer ersten Datenbank (41) gekoppelt ist, in der Daten (iv) von Abmessungen für vorbestimmte Körperprofile gespeichert sind, wobei das erste Untersystem (20) ein vorbestimmtes Körperprofil detektiert und die Steuersignale (iii) der Steuereinheit (40) eine Funktion der Daten (iv) der ersten Datenbank (41) sind.

9. System (10) nach einem der Ansprüche 1 bis 8, bei dem die Steuereinheit (40) mit einer zweiten Datenbank (42) gekoppelt ist, in der Daten (v) von Qualitätsmerkmalen für vorbestimmte Körperprofile gespeichert sind, wobei die Steuersignale (iii) der Steuereinheit eine Funktion der Daten (v) der zweiten Datenbank (42) sind.

10. Verfahren zur Qualitätskontrolle der Beschaffenheit eines Körpers (9), mit den Schritten:
- Bestimmen einer Dimension des Körpers (9) mittels eines ersten Untersystems (20), das zumindest eine Aufnahmeeinrichtung (21) und eine erste Lichtquelle (22, 24) umfasst, wobei durch das erste Untersystem (20) die Position des Körpers (9) in dem ersten Untersystem bestimmt wird,
- Bestimmen einer Oberflächenstruktur des Körpers mittels eines zweiten Untersystems (30), das zumindest eine elektronische Kameraeinrichtung (31) und eine zweite Lichtquelle (32) umfasst, und
- Erzeugen von Steuersignalen (iii) für einen Betrieb des zweiten Untersystems (30) als Funktion von Daten (i) des ersten Untersystems bezüglich einer Position des Körpers (9) in dem ersten Untersystem (20) und/oder der Dimension des Körpers (9) und von Daten (ii) des zweiten Untersystems (30) bezüglich der Position der Kameraeinrichtung (31) in dem zweiten Untersystem (30).

11. Verfahren nach Anspruch 10, bei dem die Position der Kameraeinrichtung (31) in dem zweiten Untersystem (30) relativ zu dem Körper (9) ansprechend auf die Steuersignale (iii) verstellt wird.

12. Verfahren nach Anspruch 10 oder 11, bei dem beim Betrieb des zweiten Untersystems (30) ansprechend auf die Daten (i) des ersten Untersystems (20) eine Parameterangleichung bezüglich der Meßwerte der Oberflächenstruktur des Körpers (9) durchführt wird, wobei beim Betrieb des zweiten Untersystems (30) eine Winkeltransformation bezüglich der Meßwerte der Oberflächenstruktur des Körpers (9) durchführt wird, wonach ein von der Kameraeinrichtung (31) erfasster Punkt einer Körperoberfläche derart transformiert wird, dass die Aufnahmeachse (31a) der Kameraeinrichtung (31) virtuell in einer Ebene (IV) liegt, die senkrecht zu der Körperoberfläche am Aufnahmepunkt ist.

13. Verfahren nach einem der Ansprüche 10 bis 12, bei dem die Steuersignale (iii) als eine Funktion von Daten einer ersten Datenbank (41) gebildet werden, welche Daten (iv) Abmessungen für vorbestimmte Körperprofile sind, wobei das erste Untersystem (20) ein vorbestimmtes Körperprofil detektiert.

14. Verfahren nach einem der Ansprüche 10 bis 13, bei dem die Steuersignale (iii) als eine Funktion von Daten einer zweiten Datenbank (42) gebildet werden, welche Daten (v) Qualitätsmerkmale für vorbestimmte Körperprofile sind.

15. Verfahren nach Anspruch 14, bei dem ein Meßwertbereich des zweiten Untersystems bezüglich einer Oberfläche des Körpers als eine Funktion der in der ersten oder zweiten Datenbank gespeicherten Daten und/oder manuell festgelegt wird.

16. Verfahren nach einem der Ansprüche 10 bis 15, bei dem zumindest ein Teil der Verfahrensschritte als Computer-Programm mit Programm-Code-Mitteln auf einem Computer oder einer entsprechenden Recheneinheit ausführbar ist.

17. Verfahren nach Anspruch 16, bei dem Programm-Code-Mittel auf einem Computer-lesbaren Datenträger gespeichert sind.

## Claims

1. System (10) for measuring a body (9) and for monitoring the surface of the body (9), comprising
- at least one first subsystem (20) used to determine a dimension of the body (9) and a position of the body within the first subsystem (20), the first subsystem (20) having at least one recording device (21) and a first light source (22, 24), and comprising
- at least one second subsystem (30) used to determine a surface structure of the body (9), the second subsystem (30) comprising at least one electronic camera device (31) and a second light source (32), and comprising
- a control unit (40), which generates control signals (iii) for operation of the second subsystem (30) as a function of data (i) of the first subsystem (20) with respect to the position of the body (9) in the first subsystem and/or the dimension of the body (9) and as a function of data (ii) of the second subsystem (30) with respect to the position of the camera device (31) in the second subsystem (30).

2. System (10) according to Claim 1, in which the position of the camera device (31) in the second subsystem (30) is predetermined prior to a start-up of the system or can be determined by a sensor device.

3. System (10) according to Claim 2 or 3, in which the recording device of the first subsystem (20) is an electronic camera device (21) which is formed together with the electronic camera device (31) of the second subsystem (30) by a common electronic camera device.

4. System (10) according to any of Claims 1 to 3, in which the recording device (21) of the first subsystem (20) and the camera device (31) of the second subsystem (30) are arranged in a common housing in such a way that their recording regions adjoin one another, a pointer device (34) being fitted on the camera device (31) of the second subsystem (30), which pointer device can be detected by the recording device (21) of the first subsystem (20) depending on a position of the camera device in order to determine the position of the camera device (31) in the second subsystem.

5. System (10) according to any of Claims 1 to 4, in which the position of the camera device (31) in the second subsystem (30) relative to the body (9) can be adjusted in response to the control signals of the control unit (40).

6. System (10) according to any of Claims 1 to 5, in which a parameter matching with respect to the measured values of the surface structure of the body (9) is carried out during operation of the second subsystem (30) in response to the data of the first subsystem (20).

7. System (10) according to Claim 6, in which, during operation of the second subsystem (30), an angle transformation with respect to the measured values of the surface structure of the body (9) is carried out, according to which a point of a surface of the body detected by the camera device (31) is transformed in such a way that the recording axis (31 a) of the camera device (31) lies virtually in a plane (IV) that is perpendicular to the surface of the body at the recording point.

8. System (10) according to any of Claims 1 to 7, in which the control unit (40) is coupled to a first database (41), in which data (iv) of dimensions for predetermined body profiles are stored, the first subsystem (20) detecting a predetermined body profile and the control signals (iii) of the control unit (40) being a function of the data (iv) of the first database (41).

9. System (10) according to any of Claims 1 to 8, in which the control unit (40) is coupled to a second database (42), in which data (v) of quality attributes for predetermined body profiles are stored, the control signals (iii) of the control unit being a function of the data (v) of the second database (42).

10. Method for the quality control of the constitution of a body (9), comprising the following steps:
- determination of a dimension of the body (9) by means of a first subsystem (20) comprising at least one recording device (21) and a first light source (22, 24), the position of the body (9) in the first subsystem being determined by the first subsystem (20),
- determination of a surface structure of the body by means of a second subsystem (30) comprising at least one electronic camera device (31) and a second light source (32), and
- generation of control signals (iii) for operation of the second subsystem (30) as a function of data (i) of the first subsystem with respect to a position of the body (9) in the first subsystem (20) and/or the dimension of the body (9) and as a function of data (ii) of the second subsystem (30) with respect to the position of the camera device (31) in the second subsystem (30).

11. Method according to Claim 10, in which the position of the camera device (31) in the second subsystem (30) relative to the body (9) is adjusted in response to the control signals (iii).

12. Method according to Claim 10 or 11, in which a parameter matching with respect to the measured values of the surface structure of the body (9) is carried out during operation of the second subsystem (30) in response to the data (i) of the first subsystem (20), in which case, during operation of the second subsystem (30), an angle transformation with respect to the measured values of the surface structure of the body (9) is carried out, according to which a point of a surface of the body detected by the camera device (31) is transformed in such a way that the recording axis (31 a) of the camera device (31) lies virtually in a plane (IV) that is perpendicular to the surface of the body at the recording point.

13. Method according to any of Claims 10 to 12, in which the control signals (iii) are formed as a function of data of a first database (41), which data (iv) are dimensions for predetermined body profiles, the first subsystem (20) detecting a predetermined body profile.

14. Method according to any of Claims 10 to 13, in which the control signals (iii) are formed as a function of data of a second database (42), which data (v) are quality attributes for predetermined body profiles.

15. Method according to Claim 14, in which a range of measured values of the second subsystem with respect to a surface of the body is defined as a function of the data stored in the first or second database and/or is defined manually.

16. Method according to any of Claims 10 to 15, in which at least a portion of the method steps can be executed as a computer program with program code means on a computer or a corresponding computing unit.

17. Method according to Claim 16, in which program code means are stored on a computer-readable data carrier.

## Revendications

1. Système (10) de mesurage d'un corps (9) et de surveillance de la surface dudit corps (9), avec
- au moins un premier sous-système (20), à l'aide duquel une dimension du corps (9) et une position du corps au sein du premier sous-système (20) sont déterminées, le premier sous-système (20) comportant au moins un dispositif de réception (21) et une première source lumineuse (22, 24) et avec
- au moins un deuxième sous-système (30), à l'aide duquel une structure superficielle du corps (9) est déterminée, le deuxième sous-système (30) comprenant au moins un système de caméra électronique (31) et une deuxième source lumineuse (32) et avec
- une unité de commande (40), générant des signaux de commande (iii) pour un fonctionnement du deuxième sous-système (30), en tant que fonction de données (i) du premier sous-système (20) concernant la position du corps (9) dans le premier sous-système et/ou la dimension du corps (9) et de données (ii) du deuxième sous-système (30) concernant la position du système de caméra (31) dans le deuxième sous-système (30).

2. Système (10) selon la revendication 1, dans lequel la position du système de caméra (31) dans le deuxième sous-système (30) est prédéfinie avant la mise en service du système ou peut être déterminée par un dispositif de capteurs.

3. Système (10) selon la revendication 2 ou 3, dans lequel le dispositif de réception du premier sous-système (20) est un système de caméra électronique (21), qui avec le système de caméra électronique (31) du deuxième sous-système (30) est formé par un système de caméra électronique commun.

4. Système (10) selon l'une quelconque des revendications 1 à 3, dans lequel le dispositif de réception (21) du premier sous-système (20) et le système de caméra (31) du deuxième sous-système (30) sont disposés dans un boîtier commun, de sorte que leurs zones de réception soient mutuellement adjacentes, sur le système de caméra (31) du deuxième sous-système (30) étant monté un dispositif d'aiguille (34) qui est détectable par le dispositif de réception (21) du premier sous-système (20) en fonction d'une position du système de caméra, pour déterminer la position du système de caméra (31) dans le deuxième sous-système.

5. Système (10) selon l'une quelconque des revendications 1 à 4, dans lequel la position du système de caméra (31) dans le deuxième sous-système (30) par rapport au corps (9) est réglable en réponse aux signaux de commande de l'unité de commande (40).

6. Système (10) selon l'une quelconque des revendications 1 à 5, dans lequel pendant le fonctionnement du deuxième sous-système (30), en réponse aux données du premier sous-système (20), un équilibrage des paramètres au niveau des valeurs mesurées de la structure superficielle du corps (9) est réalisé.

7. Système (10) selon la revendication 6, dans lequel pendant le fonctionnement du deuxième sous-système (30), une transformation angulaire au niveau des valeurs mesurées de la structure superficielle du corps (9) est réalisée, suite à quoi, un point d'une surface du corps détecté par un système de caméra (31) est transformé de sorte que l'axe de réception (31a) du système de caméra (31) se situe virtuellement dans un plan (IV) qui est perpendiculaire à la surface du corps au point de réception.

8. Système (10) selon l'une quelconque des revendications 1 à 7, dans lequel l'unité de commande (40) est couplée à une première base de données (41), dans laquelle des données (iv) de dimensions pour des profils de corps prédéfinis sont mémorisées, le premier sous-système (20) détectant un profil de corps prédéfini et les signaux de commande (iii) de l'unité de commande (40) étant une fonction des données (iv) de la première base de données (41).

9. Système (10) selon l'une quelconque des revendications 1 à 8, dans lequel l'unité de commande (40) est couplée à une deuxième base de données (42) dans laquelle sont mémorisées des données (v) de caractéristiques qualité pour des profils de corps prédéfinis, les signaux de commande, (iii) de l'unité de commande étant une fonction des données (v) de la deuxième base de données (42).

10. Procédé pour le contrôle qualité de la constitution d'un corps (9), avec les étapes :
- détermination de la dimension du corps (9), au moyen d'un premier sous-système (20) qui comprend au moins un dispositif de réception (21) et une première source lumineuse (22, 24), le premier sous-système (20) déterminant la position du corps (9) dans le premier sous-système,
- détermination d'une structure superficielle du corps au moyen d'un deuxième sous-système (30) comprenant au moins un système de caméra électronique (31) et une deuxième source lumineuse (32), et
- génération de signaux de commande (iii) pour un fonctionnement du deuxième sous-système (30) en tant que fonction de données (i) du premier sous-système concernant une position du corps (9) dans le premier sous-système (20) et/ou la dimension du corps (9) et de données (ii) du deuxième sous-système (30) concernant la position du système de caméra (31) dans le deuxième sous-système (30).

11. Procédé selon la revendication 10, dans lequel en réponse aux signaux de commande (iii), la position du système de caméra (31) dans le deuxième sous-système (30) par rapport au corps (9) est ajustée.

12. Procédé selon la revendication 10 ou 11, dans lequel pendant le fonctionnement du deuxième sous-système (30), en réponse aux données (i) du premier sous-système (20), un équilibrage des paramètres concernant les valeurs mesurées de la structure superficielle du corps (9) est réalisé, pendant le fonctionnement du deuxième sous-système (30), une transformation angulaire au niveau des valeurs mesurées de la structure superficielle du corps (9) étant réalisée, suite à quoi, un point d'une surface du corps détecté par un système de caméra (31) est transformé de sorte que l'axe de réception (31 a) du système de caméra (31) se situe virtuellement dans un plan (IV) qui est perpendiculaire à la surface du corps au point de réception.

13. Procédé selon l'une quelconque des revendications 10 à 12, dans lequel les signaux de commande (iii) sont créés en tant qu'une fonction de données d'une première base de données (41), lesquelles données (iv) sont des dimensions pour des profils de corps prédéfinis, le premier sous-système (20) détectant un profil de corps prédéfini.

14. Procédé selon l'une quelconque des revendications 10 à 13, dans lequel les signaux de commande (iii) sont créés en tant qu'une fonction de données d'une deuxième base de données (42), lesquelles données (v) sont des caractéristiques qualité pour des profils de corps prédéfinis.

15. Procédé selon la revendication 14, dans lequel une première fourchette de valeurs mesurées du deuxième sous-système concernant une surface du corps est fixée en tant qu'une fonction des données mémorisées dans la première ou dans la deuxième base de données et/ou manuellement.

16. Procédé selon l'une quelconque des revendications 10 à 15, dans lequel au moins une partie des étapes du procédé est réalisable sous la forme d'un programme informatique avec des moyens de code programme sur un ordinateur ou une unité de calcul correspondante.

17. Procédé selon la revendication 16, dans lequel des moyens de code programme sont mémorisés sur un support de données lisible par ordinateur.
